# EUROPEAN PATENT APPLICATION

(11) **EP 4 831 375 A1**
(43) Date of publication of application: **28.10.2026**
(21) Application number: 25382414.8
(22) Date of filing: 24.04.2025
(51) Int. Cl.: D05B 19/14

(54) **SEWING SYSTEMS AND METHODS TO CONTROL THEREOF**

(71) Applicant: ABB Robotics Schweiz AG, 8050 Zürich (CH)
(72) Inventor: VIDAL-RIBAS, Jorge, 08201 SABADELL (ES); BERNARDINO, Irene, 08228 TERRASSA (ES)
(74) Representative: Zimmermann & Partner Patentanwälte mbB

(57) **Abstract**

A sewing system is disclosed. The sewing system comprises a robot configured to hold and move a fabric piece; a sewing machine configured to sew the fabric piece held by the robot; and a control unit configured to control a sewing operation of the sewing machine on the fabric piece by: receiving a speed of the end effector and a stitch pitch, calculating a theoretical rotational speed of the electric motor of the sewing machine based on the speed of the end effector and the stitch pitch, determining a value of an operational parameter of the electric motor related to the theoretical rotational speed, and setting the operational parameter to the determined value of the operational parameter. A method to control the sewing system is also disclosed.

## Description

The present disclosure relates to a sewing system and a method to control the sewing system.

### BACKGROUND

A sewing machine stitches fabric pieces by interlocking an upper and lower thread using a needle and bobbin system. As the needle moves, a shuttle hook loops the upper thread around the bobbin thread to form a lockstitch. A feeding system, such as a feed dog, advances the fabric piece. In modern sewing machines, sewing operations are typically powered by electric motors.

Sewing machines struggle to meet the high productivity demands of large-scale industrial sewing. To address this, Cartesian sewing machines may utilize a frame with three linear axes (X, Y, and Z) controlled by servo motors for automation of speed, position, and torque. However, this setup may imply complex calibration, higher costs, and slower operation due to the precision required for movement. Additionally, its limited workspace makes it unsuitable for handling relatively larger fabric pieces.

In order to meet the productivity demands, robotic assistance may be implemented in sewing operations. For example, integrating a sewing machine head with a robotic end effector may avoid the size limitations of Cartesian systems and may improve fabric handling flexibility. However, this approach may present challenges, since adapting a robot to accommodate a sewing machine as an end effector may involve specialized hardware and advanced control algorithms, increasing both cost and complexity.

The present disclosure provides examples of sewing systems and methods that at least partially resolve some of the aforementioned disadvantages.

### SUMMARY

In a first aspect, a sewing system is provided. The sewing system comprises a robot configured to move a fabric piece, wherein the robot includes an end effector configured to hold the fabric piece. The system also comprises a sewing machine configured to sew the fabric piece held by the end effector and comprising an electric motor. The system further comprises a control unit configured to control a sewing operation of the sewing machine on the fabric piece. The control unit is configured to control the sewing operation by: receiving a speed of the end effector and a stitch pitch; calculating a theoretical rotational speed of the electric motor of the sewing machine based on the speed of the end effector and the stitch pitch; determining a value of an operational parameter of the electric motor of the sewing machine related to the calculated theoretical rotational speed; and setting the operational parameter of the electric motor to the determined value of the operational parameter.

This sewing system may enable collaborative work between the robot and the sewing machine, thereby improving the productivity of sewing operations on fabric pieces. Furthermore, the collaboration may be achieved using a relatively simple control unit, which may reduce or even avoid modifications or adaptations to the robot or the sewing machine. Moreover, because adjustments may be reduced or even avoided, the overall cost of the system may remain relatively low compared to many dedicated automated sewing systems.

As mentioned above, the control unit of the present aspect can adjust the speed of the sewing machine by using the speed of the end effector as a reference, setting an operational parameter of the electric motor of the sewing machine accordingly. These operations may involve a relatively simple and straightforward algorithm. A relatively simple and straightforward algorithm may require a relatively simple control unit. Additionally, the simplicity of the algorithm may also reduce the number of required electronic components and lower the risk of systematic errors caused by electronic failures.

Since the control unit may avoid operating with a relatively complex algorithm, the sewing system may enable rapid, agile, and efficient speed adjustments, enhancing collaboration between the sewing machine and the robot while minimizing delays and latency.

Unlike Cartesian sewing machines, which may be constrained by their workspace and not suitable for larger fabric pieces, the present system imposes no such limitations, making it suitable for fabric pieces of various sizes. This may imply a significantly flexible sewing system.

Furthermore, the robot of the present sewing system is not limited to fabric transport and may directly participate in sewing operation.

Moreover, this sewing system may be compatible with sewing machines featuring various feeding mechanisms, including feed dogs and specialized mechanisms such as the darning mechanism used in free-motion sewing. Additionally, it may also be compatible with sewing machines that lack feeding mechanisms, such as those without feed dogs. The sewing system described in this disclosure can be integrated into sewing arrangements regardless of the presence or absence of a feeding mechanism like a feed dog.

The sewing system according to the first aspect may avoid the use of vision systems to control or monitor the sewing operations.

In view of the above, the sewing system according to the first aspect may balance flexibility and cost. The sewing system may provide a seamless integration of the robot and the sewing machine that can improve performance.

In a second aspect, a method to control a sewing system is provided. The sewing system comprises a robot configured to move a fabric piece, the robot including an end effector configured to hold the fabric piece. The sewing system also comprises a sewing machine configured to sew the fabric piece held by the end effector, the sewing machine comprising an electric motor. The sewing system further comprises a control unit configured to control a sewing operation of the sewing machine on the fabric piece. To control the sewing system, the method comprises: receiving, by the control unit, a speed of the end effector and a stitch pitch; calculating, by the control unit, a theoretical rotational speed of the electric motor of the sewing machine based on the speed of the end effector and the stitch pitch; determining, by the control unit, a value of an operational parameter of the electric motor of the sewing machine related to the calculated theoretical rotational speed; and setting, by the control unit, the operational parameter of the electric motor to the determined value of the operational parameter.

Advantages derived from this aspect may be similar to those mentioned regarding the first aspect.

In this disclosure, a speed or a position of an end effector in a robot can be defined relative to a reference point. The reference point may include an origin of a reference coordinate system. The reference coordinate system may be positioned within or outside an operational space of the robot. For example, the reference coordinate system may be established with its origin at a center point at a robot base or other points in the operational space or outside the operational space.

The speed or the position of the end effector may be measured at a specific point or area on the end effector or related to the end effector. This specific point or area may serve as a representative marker for the movement or position of the entire end effector.

Moreover, in this disclosure, a tool center point (TCP) of the robot may be located at a different location. For instance, a position where an end effector or tool attaches, or, in other examples, in the robot wrist. The TCP may be located at a position where a needle of a sewing machine penetrates a fabric piece. While a TCP can be defined at various locations in the coordinate system, for simplicity, in some examples of the present disclosure, a TCP may represent a location where the end effector attaches and may serve as a reference for a robot's movements and calculations. The TCP may be positioned within the reference coordinate system.

In some cases, the reference point used to measure the speed or position of the end effector may comprise the tool center point. However, in some examples, the reference point used to measure the speed or position of the end effector may be different from the TCP.

Throughout the present disclosure, a stitch pitch can be defined as a stitch length, or a distance between two consecutive needle penetrations in a fabric piece by a sewing machine.

Throughout the present disclosure, the terms robot, industrial robot, and/or robotic arm can be used interchangeably.

Throughout the present disclosure, the term fabric piece may refer to one or more fabric pieces.

Throughout the present disclosure, a rotational speed of an electric motor of a sewing machine may refer to a number of revolutions per minute (RPM) of an electric motor driving a sewing machine. It can determine how fast a needle moves up and down, directly affecting a stitching speed.

### BRIEF DESCRIPTION OF THE DRAWINGS

Non-limiting examples of the present disclosure will be described in the following, with reference to the appended drawings, in which:
Figure 1 schematically illustrates a sewing system according to one example of the present disclosure;
Figure 2 is an open-loop algorithm diagram that may be carried out in a control unit of the sewing system of Figure 1 according to one example of the present disclosure;
Figure 3 schematically illustrates a sewing system according to a further example;
Figure 4 schematically illustrates a perspective view of a robot and a sewing machine according to a further example;
Figure 5 is a closed-loop algorithm diagram that may be carried out in the control unit of Figure 3 according to one example of the present disclosure;
Figure 6 is a closed-loop algorithm diagram that may be carried out in the control unit of Figure 3 according to another example of the present disclosure;
Figure 7 schematically illustrates a control unit of the sewing system according to one example of the present disclosure; and
Figure 8 is a block diagram of a method to control a sewing system according to one example of the present disclosure.

### DETAILED DESCRIPTION OF EXAMPLES

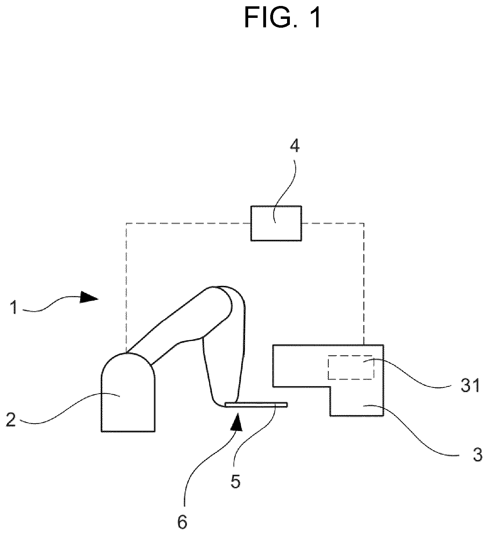

Figure 1 schematically illustrates a sewing system 1 according to one example of the present disclosure. The sewing system may comprise an automated sewing system for making a sewn product, at least partially. The sewing system 1 comprises a robot 2, a sewing machine 3, and a control unit 4. The robot 2 includes an end effector 6. The end effector 6 is configured to hold a fabric piece 5. The sewing machine 3 is configured to sew the fabric piece 5 held by the end effector 6. The control unit 4 is configured to control the sewing operation of the sewing machine 3 on the fabric piece 5. The sewing machine 3 comprises an electric motor 31.

In the sewing system 1 of Figure 1, the robot 2 is introduced to manipulate the fabric piece 5 by holding and/or moving it, while the sewing machine 3 can perform the sewing operations on the fabric piece 5. In some examples, the end effector 6 and so the fabric piece 5 can be moved with respect to, at least, a robot base or any other suitable reference.

The robot 2 may comprise an industrial robot and/or robotic arm having a number of programmable axes, i.e. rotational and/or linear degrees of freedom, between the robot base and a robot wrist. Each axis may have an associated driving element, such as a corresponding motor.

In the example of Figure 1, the relationship between control unit 4 and the robot 2, and/or the sewing machine 3 has been illustrated using dashed lines for the sake of clarity. The relationship may include a network, such as a wired and/or a wireless network. In some cases, the control unit 4 may be in data communication with any of the rest of the components of the system. In some examples, the control unit 4 may be configured to control the power feeding of the sewing machine. This way, the features of the rotation of the electric motor 31 can be controlled in a relatively simple way.

The control unit 4 may be configured to receive input data related to the operation parameters of the robot 2, to process such input data, and generate corresponding output data related to the operation parameters of the sewing machine 4.

The sewing machine 3 of the example of Figure 1 is powered by the electric motor 31, to perform the sewing operations of the sewing machine 3. The rotation of the electric motor 31 may cause the rotation of an associated output shaft. A rotational movement can be transformed into a linear or rotational movement of the different mechanisms of the sewing machine to perform the sewing operations.

The rotational speed of the electric motor 31 of the sewing machine 3 may refer to a number of revolutions per minute (RPM) of the electric motor 31 driving the sewing machine 3. The rotational speed of the electric motor 31 can usually be adjusted by varying, for example, an operational parameter such as a supply frequency and a duty cycle of the electric motor 31. The operational parameter of the sewing machine 3 can be determined by the control unit 4.

The rotational speed of the electric motor 31 is usually proportional to a stitching speed of the sewing machine 3. The stitching speed can be a rate at which stitches are made, which can be measured in stitches per minute (SPM). The stitching speed determines how fast the sewing process occurs.

As mentioned above, the electric motor 31 can drive the mechanisms of the sewing machine 3 to perform the sewing operation. For example, the stitches can be produced by the driving force exerted by the electric motor 31. If the rotational speed of the electric motor 31 of the sewing machine 3 varies, either increasing or decreasing, stitches may be produced at a higher or lower rate.

Meanwhile, a stitch pitch is the distance between the centers of consecutive stitches, affecting the sewing appearance and strength. A smaller pitch may result in tighter stitches, while a larger pitch may create more widely spaced ones.

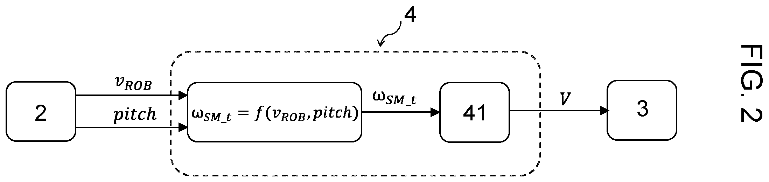

Figure 2 is an open-loop algorithm diagram that may be carried out in a control unit of the sewing system of Figure 1 according to one example of the present disclosure.

As mentioned above, the control unit 4 is configured to control the sewing operation of the sewing machine 3 on the fabric piece 5. To do so, the control unit 4 is configured to receive the speed *v_{ROB}* of the end effector 6 and the stitch pitch, calculate a theoretical rotational speed ω*_{SM_t}* of the electric motor 31 of the sewing machine 3 based on the speed *v_{ROB}* of the end effector 6 and the stitch pitch, determine a value of an operational parameter of the electric motor 31 of the sewing machine 3 related to the calculated theoretical rotational speed ω*_{SM_t}*, and set the operational parameter of the electric motor 31 to the determined value of the operational parameter.

In the present examples, the speed of the end effector 6 can be defined relative to an origin of a reference coordinate system established in an operational space of the robot 2. In some examples, the origin of the reference coordinate system can be established outside the operational space of the robot 2. The origin and the refence coordinate system can be defined in various ways. For example, the origin may be set at a center point of the robot base or, in other cases, aligned with a center point of the sewing machine 3. The origin may be set at other positions for the convenience of the user.

Regardless of the chosen reference, the speed of the end effector 6 can be measured relative to the movement of the origin. Besides, this measurement can be taken at a specific point or area on the end effector 6, and this point or area can serve as a representative marker for the movement of the entire end effector. The speed of the end effector 6 can serve as the reference for the moving speed of the fabric piece 5. This speed can be denoted as end effector speed *v_{ROB}.*

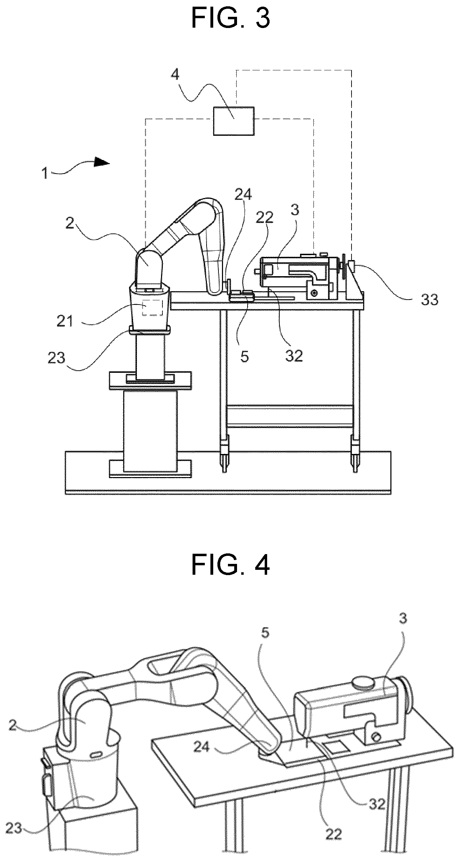

The speed of the end effector 6 may depend on the movement in the axes of the robot 2, which may define its degrees of freedom. The combined speeds in all axes may determine the overall end effector speed. In case the robot 2 comprises a robot controller 21 (see Figure 3), the robot controller 21 may calculate the end effector speed with millisecond-level anticipation. This end effector speed value or data can be transmitted to the control unit 4 and may help to ensure smooth, and latency-free sewing operations.

The speed of the end effector 6 may depend on a predefined sewing pattern or sewing path. In a straight-line sewing pattern with uniform stitch spacing, the end effector speed may remain substantially unchanged or constant in both magnitude and/or direction followed by the end effector. For a curved sewing pattern, the end effector speed may dynamically vary in the magnitude and/or direction followed by the end effector according to the sewing pattern.

As the end effector 6 holds the fabric piece 5, the speed of the end effector 6 can be used as a reference to determine the moving speed of the fabric piece 5. The speed of the end effector 6 can be substantially the same as the moving speed of the fabric piece 5. Thus, the end effector speed may be considered as the moving speed of the fabric piece 5. The movement of the fabric piece 5 can be defined relative to a part of the sewing system such as a needle.

When executing the example of Figure 2, the control unit 4 receives the end effector speed *v_{ROB}* and a stitch pitch. In some cases, the control unit 4 may receive these two parameters through a user interface or external interface, dedicated sensors, and/or predetermined stored instructions. Based on these two received parameters, i.e. the end effector speed *v_{ROB}* and the stitch pitch, the control unit 4 calculates the theoretical rotational speed ω*_{SM_t}* of the electric motor 31 of the sewing machine 3. The control unit 4 may perform a calculation following Equation 1 to determine the theoretical rotational speed ω*_{SM_t}*, wherein f denotes an appropriate function for performing the calculation ${ω}_{SM _ t} = f \left({v}_{ROB}, pitch\right)$ Equation 1

After calculating the theoretical rotational speed ω*_{SM_t}* of the electric motor 31 of the sewing machine 3, the control unit 4 determines the value of the operational parameter of the electric motor 31 of the sewing machine 3 related to the calculated speed ω*_{SM_t}.* The calculated speed ω*_{SM_t}* may correspond to a predetermined value of operational parameter of the electric motor 31.

The rotational speed of the electric motor 31 can be controlled, for instance, by a variable frequency drive or any suitable device for varying the speed of the electric motor. The variable frequency drive may be configured to vary the frequency of the electricity supplied to the electric motor. A variation in the frequency supply may vary the rotational speed of the electric motor. In the example of Figure 2, the operational parameter of the sewing machine 3 comprises the supply frequency of the electric motor 31 of the sewing machine 3. The variable frequency drive may be integrally formed with the electric motor 31 or can be separated from the electric motor. The control unit 4 may be in data communication with the variable frequency drive.

Once operational properties of the electric motor 31 are defined, its rotational speed may be mathematically correlated with a specific operational parameter. This correlation can be established through real-time CPU calculations using numerical methods or by referencing a pre-determined lookup table to reduce computation time. In the example of Figure 2, the control unit 4 determines the value of the operational parameter of the electric motor 31 related to the calculated speed ω*_{SM_t}* from a first lookup table 41. The first lookup table 41 stores a pre-determined correspondence between a rotational speed and a value of the operational parameter of the electric motor 31 of the sewing machine 3. By adjusting this operational parameter, the rotational speed of the electric motor 31 can be modified accordingly.

When the supply frequency of the electric motor 31 is selected as the operational parameter, the first lookup table 41 may provide an array of rotational speeds along with corresponding supply frequency values of the electric motor 31 of the sewing machine 3. Based on the theoretical rotational speed *ω_{SM_t}*, calculated by the control unit 4, a corresponding value V of the supply frequency of the electric motor 31 of the sewing machine 3 can be retrieved from the first lookup table 41.

The control unit 4 then sets the operational parameter of the electric motor 31 to the determined value of the operational parameter. In the example of Figure 2, the supply frequency of the electric motor 31 is set to the value V, such that the rotational speed of the electric motor 31 can be altered to reach the theoretical rotational speed ω*_{SM_t}.*

The open-loop algorithm of Figure 2 is relatively simple and straightforward, allowing fast response times and agile adjustments to the rotational speed of the sewing machine 3 without excessive delay or latency.

To maintain a substantially consistent stitching quality level, the movement of the fabric piece 5, controlled by the robot 2, may be performed substantially simultaneously or synchronized with the rotation of the electric motor 31 of the sewing machine 3. A misalignment could lead to uneven fabric motion, causing irregular stitches or fabric distortion. Therefore, control unit 4 may be configured to synchronize the two speeds, namely a moving speed of the fabric piece 5, i.e. a speed of the end effector 6, and the corresponding rotational speed of the electric motor 31 of the sewing machine 3.

The control unit 4 may use different algorithms to achieve the synchronization between the speed of the end effector 6 and the rotational speed of the electric motor 31 of the sewing machine 3. Figure 2 illustrates actions configured to be performed by the control unit 4 during the execution of the open-loop algorithm according to the example.

Figure 3 schematically illustrates a sewing system 1 according to a further example, and Figure 4 schematically illustrates a perspective view of a robot 2 and a sewing machine 4 according to one example. In these examples, the robot base 23, and the robot wrist 24 have been illustrated. In the example of Figure 3, the relationship between control unit 4 and the robot 2 and/or the sewing machine 3 has been illustrated using dashed lines for the sake of clarity. The relationship may include a network, such as a wired and/or a wireless network.

In the example of Figure 3, the sewing system 1 comprises a robot controller 21. In some examples, the robot controller 21 may be used to direct the robot 2, enabling it to move in multiple directions at varying speeds according to desired sewing patterns.

The robot controller 21 may perform calculations on the robot operation parameters. The robot controller 21 may receive data related to the robot operation parameters.

The end effector 6 may comprise a holder 22 designed to hold and manipulate the fabric piece 5 for sewing and/or carrying. Holder 22 may comprise a frame, a clamp or the like. The holder 22 can be attached to the robot 2 through the robot wrist. Due to the low stiffness of the fabric material, the holder 22 may be designed to securely clamp the fabric piece 5, allowing that the fabric piece 5 moves together with the holder 22 as directed by the robot controller 21. The holder 22 may be configured to clamp the fabric piece 5 allowing to keep the fabric piece 5 substantially extended throughout the sewing operation. There are various options available to achieve the desired functions of the holder 22, i.e. shape, size, and/or general configuration can be adapted for each case.

In the example of Figure 4, the holder 22 comprises a clamp frame, which may securely clamp the opposite sides of the fabric piece 5 within a frame, ensuring stability and proper tension during operation. The sewing operations can be performed within the clamped area of the fabric piece 5. In Figure 4, the TCP could be positioned at the robot wrist 24.

In the example of Figure 3, the sewing machine 3 performs sewing operations via a needle 32. The needle 32 can move cyclically in an up-and-down motion. Each cycle of the needle movement creates a stitch on the fabric piece 5. The rotational speed of the electric motor 31 determines how fast the needle 32 moves up and down.

The sewing machine 3 can also be equipped with a sensor 33 to measure the rotational speed of the electric motor 31. Different types of sensors 33 may be used. In the example of Figure 3, an encoder is used. When the encoder is an incremental encoder, a counter is connected to the encoder. In some examples, the sensor 33 may comprise a speed or position sensor. The sensor 33 may be in data communication with the control unit 4.

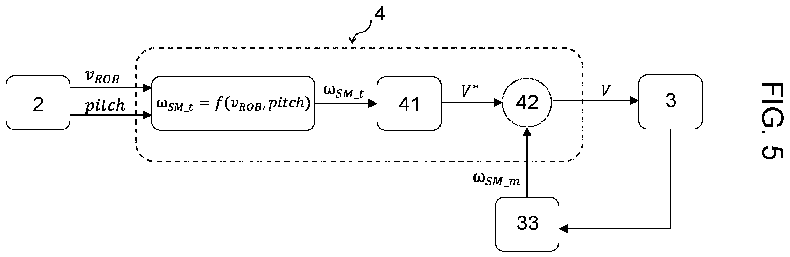

The control unit 4 of Figure 3 may use a closed-loop algorithm. Figure 5 shows an example of a closed-loop algorithm that could be applied to the example of sewing system 1 of Figure 3. Similar to the example of open-loop control algorithm of Figure 2, the example of control unit 4 of Figure 5 may calculate the theoretical rotational speed ω*_{SM_t}* of the electric motor 31 of the sewing machine 3 with two inputs, i.e. the end effector speed *v_{ROB}* and the stitch pitch. Furthermore, a real rotational speed ω*_{SM_m}* of the electric motor 31 of the sewing machine 3 may be measured by the encoder. The real rotational speed ω_{*SM*_*m*} of the electric motor 31 may be speed at which the sewing machine is performing the sewing operation. The control unit 4 may receive the measured speed ω*_{SM_m}*. The real rotational speed may correspond to a speed value measured by the sensor 33, e.g. encoder.

In the example of Figure 5, the control unit 4 retrieves a value V* of the operational parameter through the first lookup table 41 based on the calculated theoretical rotational speed ω*_{SM_t}.* However, this value V* of the operational parameter is not used directly to set the rotational speed of the electric motor 31 of the sewing machine 3.

The control unit 4 may obtain a corrected value V of the operational parameter of the electric motor 31 based on a speed error value *e*_{*SM,*1}. The speed error value *e*_{*SM*,1} may involve a discrepancy between the measured rotational speed *ω_{SM_m}* and the theoretical rotational speed *ω_{SM_t}*. The speed error value *e*_{*SM*,1} can be sent to a corrector unit 42. The corrector unit 42 may be integrally formed with the control unit 4 or may be separately formed. The corrector unit 42 may be configured to obtain a speed error corrector value. The speed error corrector value may include a variation in the measured value V*. That is, the speed error corrector value may refer to an increase or decrease in the value V*. The speed error corrector value can be obtained based on the speed error value *e*_{*SM,*1}. A particular speed error corrector value may correspond to a particular speed error value. The speed error corrector value is denoted by the term "corrector(*e*_{*SM*,1})" in the Equation 2 below. A value V of the corrected parameter of the electric motor 31 is obtained following Equation 2, wherein g₁ denotes an appropriate function for performing the calculation of the error *e_{SM,1}*; g₁ may implement a proportional-integral-derivative (PID) approach. $\left\{\begin{matrix}V = V * + corrector \left({e}_{SM , 1}\right) \\ {e}_{SM , 1} = {g}_{1} \left({ω}_{SM _ t}, {ω}_{SM _ m}\right)\end{matrix}\right.$ Equation 2

The value of the corrected parameter may vary the rotational speed of the electric motor and may help to converge the measured rotational speed *ω_{SM_m}* with the theoretical rotational speed *ω_{SM_t}.*

According to the example of Equation 2, the corrected value V of the operational parameter is obtained based on the retrieved value V* and the speed error corrector value. In the case where the operational parameter comprises supply frequency, both the retrieved value V* and the speed error correction value comprise supply frequency values.

The speed error value *e*_{*SM*,1} can be calculated in different manners. For instance, in the Equation 2, the speed error value *e*_{*SM*,1} is calculated based on the measured rotational speed *ω_{SM_m}* and the theoretical rotational speed *ω_{SM_t}* of the electric motor 31 of the sewing machine 3. In some cases, the speed error value *e*_{*SM*,1} may be obtained based on a difference between the measured and the theoretical rotational speeds of the electric motor 31, i.e. ω_{*SM*_*t*} and ω_{*SM*_}*ₘ.* The speed error corrector value may depend on that difference.

In some examples, if the speed error value *e*_{*SM*,1} does not satisfy a speed error threshold, the speed error value *e*_{*SM*,1} is set to zero. Therefore, there is no speed correction.

In some cases, the speed error value *e*_{*SM,*1} can be calculated by obtaining past values of the difference between the measured rotational speed *ω*_{*SM*_*m*} and the theoretical rotational speed *ω*_{*SM*_*t*} and may integrate the past values to produce the speed error value. The speed error corrector value may depend on the result of the integral.

In some further cases, the speed error value *e*_{*SM*,1} can be calculated by obtaining a current rate of change in the difference between the measured rotational speed *ω*_{*SM*_*m*} and the theoretical rotational speed *ω_{SM_t}*. A slope of the rate of change can be obtained by g₁ at a particular point in time. The speed error corrector value may depend on the slope of the rate of change.

The control unit 4 can set the operational parameter of the electric motor 31 to the corrected value *V* of the operational parameter. In examples, the supply frequency of the electric motor 31 may be set to V calculated with Equation 2.

With this closed-loop algorithm, the measured rotational speed ω_{*SM*_*m*} of the electric motor 31 of the sewing machine 3 can be monitored and compared with the theoretical rotational speed ω*_{SM_t}.* When a discrepancy is detected, i.e. ω*_{SMt}* - ω*_{SMm}* ≠ 0, a correction may be executed to adjust the rotational speed of the sewing machine 3, for instance, substantially in real-time. This may improve synchronization between the movement of the fabric piece 5 and the sewing operation of the sewing machine 3.

Additionally, if a stitching error occurs, the system may quickly detect and correct the error, preventing further stitching issues from arising or even reducing further stitching issues.

Therefore, the closed-loop algorithm of Figure 5, that may be implemented by the control unit 4 of Figure 3, may help to enhance sewing quality.

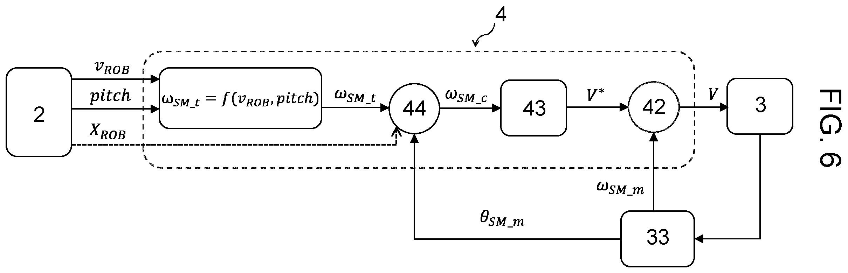

Furthermore, the end effector speed is not the only behavioral parameter at the end effector. In some examples, the position of the end effector 6 is another parameter to be considered, and it can serve as a second parameter to enhance the error correction in the control unit 4. Therefore, another example of the control unit 4 using a closed-loop algorithm is shown in Figure 6. Compared with the algorithm of Figure 5, the algorithm of Figure 6 comprises an extra feed-back loop. The extra feed-back loop is explained hereinafter.

In the example of Figure 6, an absolute position *X_{ROB}* of the end effector 6 may be controlled to be synchronized with a rotational position of the electric motor 31 of the sewing machine 3. The control unit 4 may obtain position data of the end effector 6, and may associate this position data of the end effector 6 with a theoretical rotational position θ*_{SM_t}* of the electric motor 31. In other words, a position of the end effector 6 can correspond to a predetermined rotational position of the electric motor 31 and/or the output shaft of the electric motor during sewing operations. To obtain the position data of the end effector 6, there are at least the following two options: 1) the control unit 4 may receive the absolute position *X_{ROB}* of the end effector 6 through a user interface, dedicated sensors, and/or predetermined stored instructions. 2) the control unit 4 calculates the absolute position *X_{ROB}* of the end effector through integrating the end effector speed *v_{ROB}* over a predetermined duration of the sewing operation. The absolute position of the end effector 6 may comprise the absolute position of the point representing the end effector. From the received absolute position *X_{ROB}* of the end effector 6, the theoretical rotational position θ*_{SM_t}* of the electric motor 31 in the sewing machine 3 can be obtained. These two options to obtain the position data of the end effector 6 are summarized in Equation 3 as follows: ${θ}_{{SM}_{t}} = \left\{\begin{matrix}\int {V}_{ROB} dt \\ or \\ \left({X}_{ROB}\right)\end{matrix}\right.$ Equation 3

In the example of Figure 6, the control unit 4 receives a measured rotational position θ*_{SM_m}* of the electric motor 31 of the sewing machine 3. This rotational position θ_{*SM*_*m*} can be measured by various types of sensors. In this example, the encoder is also used to measure the rotational position θ_{*SM*_*m*}. If the encoder is an incremental encoder, a counter may also be needed.

The control unit 4 may calculate a position error value *e*_{*SM,*2} based on the theoretical rotational position *θ_{SM_t}* of the electric motor 31 and the measured rotational position *θ_{SM_m}* of the electric motor 31. The position error value *e*_{*SM,*2} may involve a discrepancy between the theoretical rotational position *θ_{SM_t}* and the measured rotational position *θ_{SM_m}.* A corrected value of the rotational speed *ω*_{*SM*_*c*} of the electric motor 31 can be obtained based on the theoretical rotational speed ω_{*SM*_*t*} and the position error corrector value denoted by "corrector(*e*_{*SM*,2})" in Equation 4 below. A corrector unit 44 can be used to provide the position error corrector value. The corrector unit 44 may be integrally formed with the control unit 4 or may be separately formed. The position error corrector value may include a variation in the theoretical rotational speed ω_{*SM*_*t*}. A particular position error corrector value may refer to a particular position error value. The corrected value of the rotational speed ω_{*SM*_*c*} of the electric motor 31 of the sewing machine 3 can be obtained from Equation 4, wherein g₂ denotes an appropriate function for performing the calculation of *e*_{*SM,*2}, e.g. a proportional-integral-derivative (PID) approach: $\left\{\begin{matrix}{ω}_{{SM}_{c}} = {ω}_{{SM}_{t}} + corrector \left({e}_{SM , 2}\right) \\ {e}_{SM , 2} = {g}_{2} \left({θ}_{SM _ t}, {θ}_{SM _ m}\right)\end{matrix}\right.$ Equation 2

The corrected value of the rotational speed ω_{*SM*_*c*} of the electric motor 31 may vary the rotational speed of the electric motor and may help to converge the theoretical rotational position *θ_{SM_t}* of the electric motor 31 with the measured rotational position *θ_{SM_m}* of the electric motor 31.

According to one example, the position error value *e*_{*SM,*2} may be obtained based on a difference between the theoretical and the measured rotational positions of the sewing machine 3, i.e. θ*_{SM_t}* and θ*_{SM_m}.* Thus, the position error corrector value may depend on that difference.

If the position error value *e*_{*SM,*2} does not satisfy a position error threshold, the position error value *e*_{*SM,*2} is set to zero. Therefore, there is no position correction.

In some cases, the function g₂ may obtain past values of the difference between the theoretical rotational position *θ_{SM_t}* and the measured rotational position θ*_{SM_m}* and may integrate the past values. The position error correction value may depend on the result of the integral.

In some further cases, the position error value *e*_{*SM,*2} may obtain a current rate of change in the difference between the theoretical rotational position *θ_{SM_t}* and the measured rotational position *θ_{SM_m}.* A slope of the rate of change can be obtained by the function g₂ at particular point in time. The position error correction value can be produced based on the slope of the rate of change.

The control unit 4 may determine the value of the operational parameter of the electric motor 31 related to the corrected value of the rotational speed ω_{*SM*_*c*}. In some examples, the control unit 4 determines the value of the operational parameter related to the corrected value of the rotational speed ω_{*SM*_*c*} from a second lookup table 43. This second lookup table 43 may be similar to the first lookup table 41, and stores a pre-determined correspondence between a corrected value of the rotational speed and a corrected value of the operational parameter of the sewing machine 3. When the operational parameter is the supply frequency of the electric motor 31, this second lookup table 43 can be used to associate the corrected value of the rotational speed ω_{*SM*_*c*} and the value *V** of supply frequency. This supply frequency value *V** is sent to the corrector unit 42 and is corrected to a value *V* based on the difference between the theoretical and measured rotational speeds, i.e. ω*_{SM_t}* and ω_{*SM*_*m*}, of the electric motor 31 of the sewing machine 3 following Equation 2. The control unit 4 sets the supply frequency of the electric motor 31 to the value *V*.

In some examples, the first lookup table 41 and the second lookup table 43 can be integrally formed, or be the same.

The example in Figure 6 can monitor both the rotational speed and the rotational position of the electric motor 31 of the sewing machine 3, applying corrections when discrepancies are detected between measured and theoretical values, i.e. ω*_{SMₜ}* - ω*_{SMₘ}* ≠ 0 and/or θ*_{SMₜ}* - θ*_{SMₘ}* ≠ 0. As a result, sewing errors may be even further reduced. The control unit 4, as shown in Figure 6, may integrate error corrections for both rotational speed and rotational position, enhancing precision, stability, and adaptability in dynamic systems. By simultaneously addressing these two parameters, it may ensure more accurate and efficient performance. Additionally, it may also help minimize overshoot, improve overall control robustness, and better compensate for external disturbances. This may enable the control unit 4 to respond significantly rapidly to unexpected operational deviations in the sewing machine 3.

According to one example of the present disclosure, the control unit 4 may control the operation of the robot 2 according to a series of predetermined instructions in the form of an algorithm. The predetermined instructions may include manipulation and sewing instructions to produce a sewn product in a substantially automated way.

The robot 2 may be operated to pick a fabric piece 5 to be sewn. The fabric piece 5 can be manually or automatically provided to the robot 2. The fabric piece 5 may be held by the holder 22 as the end effector. The robot 2 may transport the fabric piece 5 to the sewing machine 3 to sew the fabric piece 5.

The robot controller 21 may command the robot to place the fabric piece 5 relatively to the sewing machine in order to start the sewing operation. The robot controller 21 may command the robot 2 to move the fabric piece 5 along a predetermined sewing path, such as linear or curved sewing path. The end effector 6 may move in a predetermined direction and at a predetermined speed. The control unit 4 may set or adjust the operational parameter of the electric motor to the determined operational parameter. The operational parameter may be determined according to any of the examples disclosed herein. The control unit 4 may control the sewing operation following any example of open loop or closed loop as discussed herein.

After the sewing operation has concluded, the robot 2 may be commanded to carry the sewn fabric piece 5 to a predetermined location.

If there are two or more fabric pieces 5 to be sewn, the sewing operation may be substantially the same. The sewing path may be defined between the two or more fabric pieces 5 to join the fabric pieces together.

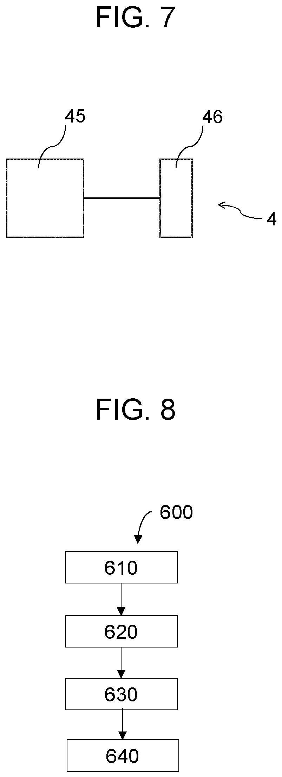

Figure 7 schematically illustrates a view of the control unit 4 of the sewing system according to one example of the present disclosure. The control unit 4 may comprise a controller 45. Controller 45 may be a processor, a chip, a computational device, or processing resources that execute sequences of machine-readable instructions contained in a memory. Controller 45 performs operations on data. The memory may be a non-transitory machine-readable storage medium 46. As can be seen in Figure 7, the non-transitory machine-readable storage medium 46 is coupled to the controller 45. Examples of a non-transitory machine-readable storage medium may include a memory device, a floppy disk, a compact disk (CD), a digital versatile disk (DVD), a USB drive, a computer memory, a read-only memory, or other devices that may store computer code.

The machine-readable instructions may comprise a computer program(s) in the form of source code, object code, a code intermediate source, and object code such as in partially compiled form, or in any other form suitable for use in implementing the methods and/or systems according to the present disclosure. The machine-readable instructions may comprise algorithms as disclosed herein.

The control unit 4 may be an external control unit, independent of both the robot 2 and the sewing machine 3. In some cases, the control unit 4 can also be an integrated part of the robot controller 21, providing a more cohesive and streamlined solution.

Feeding mechanisms in sewing machines move a fabric piece beneath a needle at a precise rate. A feed dog mechanism is a common feeding system widely used in many sewing machines. It synchronizes the movement of the fabric piece with the up-and-down motion of the needle. As the needle rises, the feed dog lifts and advances the fabric piece, while it lowers when the needle descends to avoid interference. In contrast, the darning mechanism disables the feed dog (if present), enabling free-motion sewing, where the user can manually move the fabric piece in any direction while the needle stitches. In the examples shown above, the fabric piece 5 is moved by the robot 2. Therefore, sewing system 1 can be compatible with sewing machines equipped with or without a feed dog mechanism. For example, the sewing machine 3 may comprise a darning mechanism. The sewing system 1 may be implemented regardless of the presence of a feeding mechanism.

The movement of the fabric piece 5 driven by the robot 2 can either remain uninterrupted during the entire sewing process, or pause when the needle 32 penetrates the fabric piece 5 and resumes once the needle exits.

While the sewing system 1 is versatile and can be applied to various textile applications, it is suitable for sewing automotive textiles, such as seat covers, airbags, seat belts, and more. Textile products can be sewn using 2D, 3D, or a combination of both types of patterns. 2D sewing patterns are flat, two-dimensional templates that guide the cutting and assembly of fabric pieces. These patterns represent the product in its unassembled, flat state. In contrast, 3D sewing patterns capture the shape and dimensions of the final product in three-dimensional space. These patterns are often created using 3D modeling or virtual prototyping technologies.

Figure 8 is a block diagram of a method 600 to control a sewing system according to one example of the present disclosure. The method 600 can be applied to a sewing system 1 according to any of the examples disclosed herein.

In block 610, the control unit 4 receives an end effector speed *v_{ROB}* and a stitch pitch. This may be carried out as discussed herein.

The control unit 4 calculates a theoretical rotational speed ω_{*SM*_*t*} of the electric motor of the sewing machine based on the two received parameters in block 610, i.e. the end effector speed *v_{ROB}* and the stitch pitch, as represented by block 620. This theoretical rotational speed ω*_{SM_t}* can be an expected value of speed corresponding to the two received parameters.

In block 630, the control unit 4 determines a value of an operational parameter of the electric motor of the sewing machine related to the theoretical rotational speed ω*_{SM_t}.* The value of an operational parameter may correspond to the expected value of speed of the end effector.

In some examples, block 630 may comprise: obtaining, by the control unit, the value of the operational parameter from a first lookup table. The first lookup table may store a pre-determined correspondence between a rotational speed and a value of the operational parameter of the sewing machine.

In some examples, the operational parameter mentioned in block 630 may comprise a supply frequency of the electric motor of the sewing machine.

In block 640, the control unit sets the operational parameter of the electric motor to the value of the operational parameter determined in block 630.

The method 600 may comprise further features according to the example of the system as illustrated in Figure 5. Since the example of Figure 5 comprises a closed loop configuration, the features of the method related to the Figure 5 may imply a closed loop configuration as well. Therefore, the method may comprise receiving by the control unit 4 the measured rotational speed ω_{*SM*_*m*} of the electric motor 31 of the sewing machine. The control unit 4 may calculate the speed error value *e*_{*SM*,1} based on the measured rotational speed *ω_{SM_m}* and the theoretical rotational speed *ω*_{*SM*_*t*} of the electric motor 31 of the sewing machine 3. The speed error value *e*_{*SM*,1} may be computed according to any of the examples discussed herein. Then, the control unit 4 may obtain a corrected value of the operational parameter of the electric motor 31 based on the speed error value *e*_{*SM,*1}. This corrected value may be obtained according to any of the examples disclosed herein. The corrected value of the operational parameter of the electric motor may be used as a reference to set the operational parameter of the electric motor and vary the speed of the electric motor. The correction of the operational parameter can be calculated based on the feedback from the sewing machine 3. In the present example, the feedback may comprise the measured rotational speed ω_{*SM*_*m*} of the electric motor 31.

In some examples, the method 600 may comprise further features according to the example of the system as illustrated in Figure 6. Since the example of Figure 6 comprises a closed loop configuration, the features of the method related to the Figure 6 may imply a closed loop configuration as well. Therefore, the method may comprise obtaining, by the control unit 4, position data of the end effector. The position data of the end effector may be obtained according to any of the examples discussed herein. The control unit 4 may associate the obtained position data with a theoretical rotational position θ*_{SM_t}* of the electric motor. The theoretical rotational position θ*_{SM_t}* may correspond to an expected rotational position of the electric motor 31. The control unit 4 may receive a measured rotational position θ*_{SM_m}* of the electric motor. The control unit 4 may calculate a position error value *e*_{*SM,*2} based on the theoretical rotational position *θ_{SM_t}* of the electric motor 31 and the measured rotational position *θ_{SM_m}* of the electric motor 31. The position error value *e*_{*SM,*2} may be calculated according to any of the examples discussed herein. The method may further comprise obtaining, by the control unit 4, a corrected value of the rotational speed *ω_{SM_c}* of the electric motor 31 based on the theoretical rotational speed *ω_{SM_t}* and the position error value *e*_{*SM*,2}. The corrected value of the rotational speed *ω*_{*SM*_*c*} of the electric motor 31 can be obtained following any of the examples disclosed herein. The corrected value obtained can be used as a reference to set the operational parameter of the electric motor and vary the speed of the electric motor. The correction of the operational parameter can be calculated based on the feedback from the sewing machine. The feedback of this example comprises the measured rotational speed and the measured rotational position of the electric motor.

In some examples, to obtain position data of the end effector may comprise receiving, by the control unit, an absolute position *X_{ROB}* of the end effector from an external interface of the robot. The position data of the end effector may be also calculated by the control unit by integrating the end effector speed *v_{ROB}* over a predetermined duration of the sewing operation. The absolute position of the end effector may comprise the absolute position of the point representing the end effector. The external interface of the robot may be an interface allowing external entities to provide the absolute position.

In some examples, the corrected value of the operational parameter may be obtained, by the control unit, from a second lookup table. The second lookup table may store a pre-determined correspondence between a corrected value of the rotational speed and a corrected value of the operational parameter of the sewing machine.

According to some examples, the method 600 may comprise operating the robot 2 to pick or hold the fabric piece, and transporting the fabric piece 5 to sewing machine 3 to sew the fabric piece 5.

The method 600 may further comprise moving the fabric piece 5 along a predetermined sewing path. If there are two or more fabric pieces to the sewn together, the pieces can be moved together as well. The sewing machine 4 may be operated to perform the sewing operations. The speed of the electric motor 31 of the sewing machine 4 can be set or adjusted according to any of the examples discussed herein.

The method 600 may comprise commanding, by the control unit 4, the robot to carry the sewn fabric piece 5 to a predetermined location. The predetermined location may be a station inside a manufacturing site. The sewn product may be finished or may require further operations.

Although only a number of examples have been disclosed herein, other alternatives, modifications, uses and/or equivalents of the present disclosure are possible. The scope of the present disclosure should not be limited by the particular examples but should be determined only by a fair reading of the claims that follow.

Reference signs related to drawings are placed in parentheses in the claims are solely for attempting to increase the intelligibility and shall not be construed as limiting the scope of the claim.

## Claims

1. A sewing system (1) comprising:
o a robot (2) configured to move a fabric piece (5), wherein the robot includes an end effector (6) configured to hold the fabric piece (5);
∘ a sewing machine (3) configured to sew the fabric piece (5) held by the end effector (6), wherein the sewing machine comprises an electric motor (31); and
∘ a control unit (4) configured to control a sewing operation of the sewing machine (3) on the fabric piece (5) by:
- receiving a speed (*v_{ROB}*) of the end effector (6) and a stitch pitch;
- calculating a theoretical rotational speed (*ω_{SM_t}*) of the electric motor (31) based on the speed (*v_{ROB}*) of the end effector (6) and the stitch pitch;
- determining a value of an operational parameter of the electric motor (31) related to the calculated theoretical rotational speed (*ω_{SM_t}*); and
- setting the operational parameter to the determined value of the operational parameter.

2. The sewing system (1) according to claim 1, wherein the control unit (4) is configured to control the sewing operation by:
- receiving a measured rotational speed (*ω_{SM_m}*) of the electric motor (31);
- calculating a speed error value (*e*_{*SM,*1}) based on the measured rotational speed (*ω*_{*SM*_*m*}) and the theoretical rotational speed (*ω*_{*SM*_*t*});
- obtaining a corrected value of the operational parameter based on the speed error value (*e*_{*SM,*1)};
- setting the operational parameter to the corrected value of the operational parameter.

3. The sewing system (1) according to claim 1, wherein the control unit (4) is configured to control the sewing operation by:
- determining the value of the operational parameter related to the calculated theoretical rotational speed (*ω*_{*SM*_*t*}) from a first lookup table (41), wherein the first lookup table (41) stores a pre-determined correspondence between a rotational speed and a value of the operational parameter of the sewing machine (3).

4. The sewing system (1) according to any of claims 1 to 2, wherein the control unit (4) is configured to control the sewing operation by:
- obtaining position data of the end effector (6);
- associating the position data with a theoretical rotational position (*θ_{SM_t}*) of the electric motor;
- receiving a measured rotational position (*θ_{SM_m}*) of the electric motor (31);
- calculating a position error value (*e*_{*SM,*2}) based on the theoretical rotational position (*θ_{SM_t}*) and the measured rotational position (*θ_{SM_m}*);
- obtaining a corrected value of the rotational speed (*ω_{SM_c}*) based on the theoretical rotational speed (*ω_{SM_t}*) and the position error value (*e*_{*SM,*2});
- obtaining a corrected value of the operational parameter based on the corrected value of the rotational speed (*ω_{SM_c}*).

5. The sewing system (1) according to claim 4, wherein the control unit (4) is configured to control the sewing operation by:
- determining the corrected value of the operational parameter from a second lookup table (43), wherein the second lookup table (43) stores a pre-determined correspondence between a corrected value of the rotational speed and a corrected value of the operational parameter of the sewing machine (3).

6. The sewing system (1) according to any of the preceding claims, wherein the operational parameter comprises a supply frequency of the electric motor (31).

7. The sewing system (1) according to any of the preceding claims, wherein the control unit (4) is an external control unit or an integrated part of a robot controller (21).

8. A method to control a sewing system (1), wherein the sewing system (1) comprises:
o a robot (2) configured to move a fabric piece (5), wherein the robot includes an end effector (6) configured to hold the fabric piece (5);
∘ a sewing machine (3) configured to sew the fabric piece (5) held by the end effector (6), wherein the sewing machine (3) comprises an electric motor (31); and
∘ a control unit (4) configured to control a sewing operation of the sewing machine (3) on the fabric piece (5);
the method comprising:
- receiving, by the control unit (4), a speed (*v_{ROB}*) of the end effector (6) and a stitch pitch;
- calculating, by the control unit (4), a theoretical rotational speed (*ω_{SM_t}*) of the electric motor (31) based on the speed (*v_{ROB}*) of the end effector (6) and the stitch pitch;
- determining, by the control unit (4), a value of an operational parameter of the electric motor (31) related to the calculated theoretical rotational speed (*ω*_{*SM*_*t*}); and
- setting, by the control unit (4), the operational parameter to the determined value of the operational parameter.

9. The method according to claim 8, comprising:
- receiving, by the control unit (4), a measured rotational speed (*ω_{SM_m}*) of the electric motor (31);
- calculating, by the control unit (4), a speed error value (*e*_{*SM,*1}) based on the measured rotational speed (*ω_{SM_m}*) and the theoretical rotational speed (*ω_{SM_t}t);*
- obtaining, by the control unit (4), a corrected value of the operational parameter based on the speed error value (*e*_{*SM,*1});
- setting, by the control unit (4), the operational parameter to the corrected value of the operational parameter.

10. The method according to claim 8, wherein determining the value of an operational parameter comprises:
- obtaining, by the control unit (4), the value of the operational parameter from a first lookup table (41), wherein the first lookup table (41) stores a pre-determined correspondence between a rotational speed and a value of the operational parameter of the sewing machine (3).

11. The method according to any of claims 8 to 9, comprising:
- obtaining, by the control unit (4), position data of the end effector (6);
- associating, by the control unit (4), the position data of the end effector (6) with a theoretical rotational position (*θ_{SM_t}*) of the electric motor (31);
- receiving, by the control unit (4), a measured rotational position (*θ_{SM_m}*) of the electric motor (31);
- calculating, by the control unit (4), a position error value (*e*_{*SM,*2}) based on the theoretical rotational position (*θ*_{*SM*_*t*}) and the measured rotational position (*θ_{SM_m}*);
- obtaining, by the control unit (4), a corrected value of the rotational speed (*ω_{SM_c}*) based on the theoretical rotational speed (*ω_{SM_t}*) and the position error value (*e*_{*SM,*2});
- obtaining, by the control unit (4), a corrected value of the operational parameter based on the corrected value of the rotational speed (*ω*_{*SM*_*c*}).

12. The method according to claim 11, wherein obtaining position data of the end effector (6) comprises:
- calculating, by the control unit (4), an absolute position (*X_{ROB}*) of the end effector through integrating the speed (*v_{ROB}*) of the end effector (6) over a predetermined duration of the sewing operation.

13. The method according to claim 11, wherein obtaining position data of the end effector (6) comprises:
- receiving, by the control unit (4), an absolute position (*X_{ROB}*) of the end effector (6) from an external interface of the robot (2).

14. The method according to any of claims 11 to 13, wherein determining the corrected value of the operational parameter comprises:
- obtaining, by the control unit (4), the corrected value of the operational parameter from a second lookup table (43), wherein the second lookup table (43) stores a pre-determined correspondence between a corrected value of the rotational speed and a corrected value of the operational parameter of the sewing machine (3).

15. The method according to any of claims 8 to 14, wherein the operational parameter comprises a supply frequency of the electric motor (31).
